# EUROPEAN PATENT SPECIFICATION

(11) **EP 2 662 828 B1**
(45) Date of publication and mention of the grant of the patent: **06.05.2020**
(21) Application number: 12167734.8
(22) Date of filing: 11.05.2012
(51) Int. Cl.: G06T 7/80

(54) **A vision system and method for a motor vehicle**
Sichtsystem und -verfahren für ein Kraftfahrzeug
Système de vision et procédé pour véhicule à moteur

(43) Date of publication of application: 13.11.2013
(73) Proprietor: Veoneer Sweden AB, 447 83 Vårgårda (SE)
(72) Inventor: Persson, Gustav, 58336 Linköping (SE); Cronvall, Per, 58332 Linköping (SE); Elbornsson Skogstjärna, Jonas, 59074 Ljungsbro (SE)
(74) Representative: Müller Verweyen

(56) References cited:
- WO-A1-2010/038224
- DE-A1-102006 044 615
- US-A1- 2009 103 779
- YARON CASPI ET AL: "Feature-Based Sequence-to-Sequence Matching", INTERNATIONAL JOURNAL OF COMPUTER VISION, KLUWER ACADEMIC PUBLISHERS, BO, vol. 68, no. 1, 1 March 2006 (2006-03-01), pages 53-64, XP019410096, ISSN: 1573-1405, DOI: 10.1007/S11263-005-4842-Z

## Description

The invention relates to a vision system for a motor vehicle, comprising an imaging means with a plurality of imaging devices for acquiring images from a surrounding of a motor vehicle, and a processing means adapted to perform image processing on images from said imaging devices, said processing means comprising an object detection means adapted to detect objects in the surrounding of the motor vehicle, namely pedestrians, other vehicles, bicyclists or animals, based on image data from said imaging means, and an estimation means adapted to estimate the extrinsic calibration of at least one of said imaging devices.

In vision systems it is often beneficial to use multiple imaging devices, like cameras, in order to obtain more information than would be possible in a single imaging device system. In such vision systems, knowing the orientation of each imaging device, i.e. the extrinsic calibration of each imaging device, is critical for system performance. Low precision in camera calibration typically causes increased computational cost because it requires searching of larger areas to find matching objects in the image streams. These larger search areas further increase the risk of false detections and erroneous associations and will effectively limit the detection distance.

Known approaches for finding extrinsic camera calibration parameters include the detection of the vanishing point and using them to estimate camera rotation. Optical flow can be used for camera calibration in a moving system. The eight-point algorithm and descendants thereof, in combination with feature detectors for finding correspondence points, such as the Harris corner detector or SIFT, are commonly used for calibration of stereo and multi-view systems. These methods can be expected to perform well only when there is a large similarity between images from the different cameras, i.e. when the cameras are of similar type and are observing the scene from similar viewpoints.

DE 10 2006 044 615 A1 discloses a vision system for a motor vehicle where a calibration of an imaging means is performed using the position of detected objects of the road infrastructure, like traffic signs, guide posts, lamp posts, curbs, which have a standardized size or are arranged in predetermined distances to each other.

US 2009 0103779 A1 discloses another generic vision system.

WO 2010/038224 A1 discloses a vision system for a motor vehicle where a calibration of an imaging means is performed using the position of a stationary object in an environment external of the vehicle.

The problem addressed by the invention is to provide a vision system and method providing a computationally affordable but effective estimation of the extrinsic calibration of at least one imaging device, in particular of imaging devices of different type or wavelength range of operation and/or different viewpoints.

The invention solves this problem with the features of the independent claims. Using the position of detected objects for the calibration estimation is particularly advantageous since no additional image features, like edges or vanishing points, have to be detected, but the existing object detector can be used, which makes the inventive approach computationally affordable. Furthermore, the calibration estimation will in the most natural way be optimized for the object detection application, e.g. effects of camera properties will implicitly be weighted in the calibration according to their influence on the object detection algorithm. The inventive approach is independent of the type of imaging device, i.e. independent of its focal length, sensor type, wavelength range (visible, NIR, FIR), etc., and works for relative calibration of imaging devices at different viewpoints.

Expediently the processing means comprises an accumulation means adapted to track and store the position of a plurality of detected objects over a predetermined period of time. In this manner, the statistics can be improved and the reliability of the positions of detected objects can be significantly increased. Preferably the position of a plurality of detected objects is tracked over a predetermined period of time for systematic deviations, which is much more reliable than evaluating single position deviations. For example, a lateral/yaw calibration deviation may be estimated if the positions of detected objects show a systematic lateral deviation in images from different imaging devices. A vertical/pitch calibration deviation may be estimated if the positions of detected objects show a systematic vertical deviation in images from different imaging devices. A rotational/roll calibration deviation may be estimated if the positions of detected objects show a systematic rotational deviation in images from different imaging devices. A focal length and/or an axial calibration deviation may be estimated if the positions of objects show a systematic radial displacement in images from different imaging devices.

The estimated extrinsic calibration of the imaging device may be used in any manner in the further processing. For example, the estimated extrinsic calibration may be used by the processing means to adjust corresponding camera calibration parameters, like yaw, roll and/or pitch parameters. However, the invention is not restricted to adjusting camera calibration parameters. Furthermore, hardware adjustments are not excluded, for example a focal length adjustment of a focusing element of the imaging device.

In a preferred embodiment of the invention, the images from a pre-determined one of said imaging devices are scanned periodically. Preferably, a mapping means is provided for mapping hypotheses into the images from another imaging device, defining search areas in said images. In this case, the estimation means may in one embodiment act on the mapping means by adjusting camera calibration parameters. In the preferred case when the imaging means comprises a FIR imaging device, it is preferably the images from this FIR device that are scanned periodically. Preferably the imaging means comprises at least one imaging device operating in a non-FIR wavelength range. In a preferred embodiment this may be an imaging device operating in the visible range. In general, the imaging means can comprise any number of imaging devices, like cameras, operating in one or more wavelength ranges comprising FIR, NIR and/or visible light.

In a preferred implementation the vision system comprises at least one object detector adapted to generate one or more detection hypotheses in the images from each of said imaging devices. In this case, at least one classifier is preferably provided for accepting or rejecting the detection hypotheses. Preferably the processing means is adapted to keep track of where in the mapped search areas detection hypotheses finally classified as true detected objects were generated. This allows for an effective determination of systematic deviations of the position of detected objects according to a preferred embodiment of the invention.

In the following the invention shall be illustrated on the basis of preferred embodiments with reference to the accompanying drawings, wherein:
- Fig. 1: shows a schematic view of a vision system according to the invention;
- Fig. 2: shows a schematic flow diagram illustrating the object detection and calibration estimation in the processing means of the vision system;
- Fig. 3: shows a schematic illustration of a fusion means of the vision system according to a preferred embodiment; and
- Fig. 4: shows a schematic illustration of the fusion means of the vision system in an alternative embodiment.

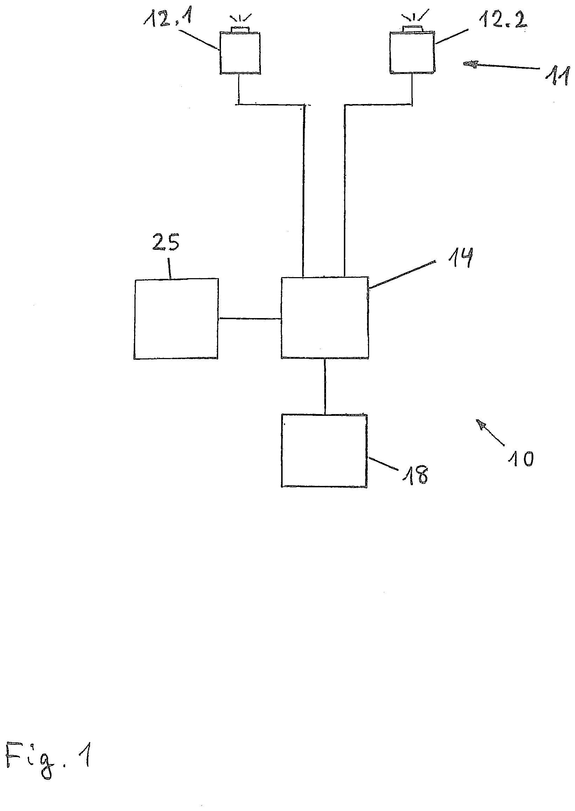

The vision system 10 is mounted in a motor vehicle and comprises an imaging means 11 for acquiring images of a region surrounding the motor vehicle, for example a region in front of the motor vehicle. Preferably the optical imaging means 11 operates mainly in the visible and/or the infrared region, where infrared covers near IR with wavelengths between 0.75 and 5 microns and/or far IR with wavelengths beyond 5 microns. The imaging means 11 comprises a plurality of imaging devices 12.1, 12.2. In the embodiment of Fig. 1, for example, two imaging devices 12.1, 12.2 are provided. The imaging devices 12.1, 12.2 may in particular be cameras. In a preferred application, the cameras 12.1, 12.2 are operative in different spectral regions. In a preferred embodiment, one of the cameras is an FIR camera 12.1 and the other camera 12.2 operates in the visible region.

The image data acquired by the imaging means 11 are provided to an electronic processing means 14 where image and data processing is carried out by corresponding software and/or hardware like for example FPGA and/or ASIC. In particular, the image and data processing in the processing means 14 comprises the following functions: identification and classification of possible objects surrounding the motor vehicle, such as pedestrians, other vehicles, bicyclists or animals; tracking over time the position of identified object candidates in the recorded images; calculation of a collision probability between the vehicle and a detected object; and/or activation or control of at least one driver assistance and/or safety means 18 depending on the result of the object detection and tracking processing and/or said collision probability calculation. The driver assistance and/or safety means 18 may in particular comprise a display means for displaying information relating to a detected object. However, the invention is not limited to a display means. The driver assistance and/or safety means 18 may in addition or alternatively comprise a warning means adapted to provide a collision warning to the driver by suitable optical, acoustical and/or haptical warning signals; one or more restraint systems such as occupant airbags or safety belt tensioners, pedestrian airbags, hood lifters and the like; and/or dynamic vehicle control systems such as brakes or steering means. The processing means 14 expediently has access to a memory means 25.

The electronic processing means 14 is preferably programmed or programmable and expediently comprises a microprocessor or micro-controller. The electronic processing means 14 can preferably be realized in a digital signal processor (DSP). The electronic processing means 14 and the memory means 25 are preferably realised in at least one on-board electronic control unit (ECU) and may be connected to the imaging means 11 via a separate cable or a vehicle data bus. In another embodiment an ECU and one or more of the imaging devices 12.1, 12.2 can be integrated into a single unit, where a one box solution including an ECU and all imaging devices 12.1, 12.2 can be preferred. All steps from imaging, image pre-processing, image processing to activation or control of driver assistance and/or safety means 18 are performed automatically and continuously during driving in real time.

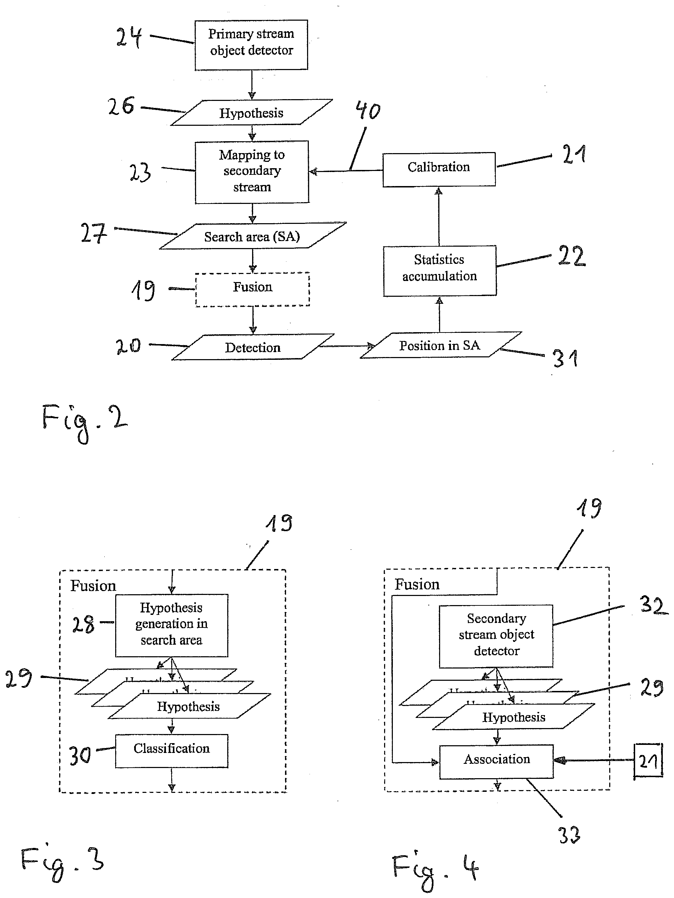

A preferred method of object detection and estimation of camera calibration is illustrated in Figure 2. The primary stream object detector 24 finds detection hypotheses in the image stream of one camera, preferably an FIR camera 12.1. Based on these detections it generates one or more detection hypotheses 26 within initially rather large search areas in the image stream of one or more other cameras (here the camera 12.2 operating in the NIR or visible range) defined by the current camera calibration parameters, which initially have a lower precision. The mapping of the detection hypotheses from the primary stream to the secondary stream is performed by a mapping means 23 and leads to corresponding search areas 27 in the secondary stream.

Subsequently, fusion of information from the different imaging devices 12.1, 12.2 is performed in the fusion means 19. A preferred embodiment of the fusion means is illustrated in Figure 3. Here, the fusion means 19 comprises a hypothesis generator 28 for generating one or more object detection hypotheses 29 in the search area 27, and a classifier 30 for finally accepting or rejecting detection hypotheses 29, resulting in detections 20.

In a subsequent step 31 the processing means 14 keeps track of the positions of where in the search areas detection hypotheses finally classified as true detections were generated. This information may for example be stored in the memory 25 shown in Figure 1. In the accumulator 22 the position data obtained in step 31 is accumulated over time in order to improve the statistical reliability of the position data and resolve the inherent ambiguity of the mapping. In the calibration estimator 21 the positions of the objects detected in the object detector 20 are finally evaluated for systematic deviations, providing the estimated extrinsic camera calibration (output 40) for further processing.

In the embodiment shown in Figure 2, the estimated extrinsic camera calibration is provided to the mapping means 23 as indicated by arrow 40 in order to adjust the camera calibration parameters in the mapping means accordingly. For example, if the positions of detected objects show a systematic lateral deviation in images from imaging device 12.2 with respect to images from imaging device 12.1, the calibration estimator 21 may cause the mapping means 23 to adjust the corresponding camera calibration parameter in order to compensate for said lateral deviation. If the positions of detected objects show a systematic vertical deviation in images from imaging device 12.2 with respect to images from imaging device 12.1, the calibration estimator 21 may cause the mapping means 23 to adjust the corresponding camera calibration parameter in order to compensate for said vertical deviation. If the positions of detected objects show a systematic rotational deviation in images from imaging device 12.2 with respect to images from imaging device 12.1, the calibration estimator 21 may cause the mapping means 23 to adjust the corresponding camera calibration parameter in order to compensate for said rotational deviation.

However, other applications of the extrinsic camera calibration estimated in the calibration estimator 21 are possible. Therefore, the output 40 of the calibration estimator 21 may be provided to other parts of the vision system 10 and/or to other functional blocks in the processing means 14 instead of, or in addition to, the mapping means 23.

As the calibration estimated by the calibration estimator 21 converges, detections occur closer to their expected position in any given image data stream in relation to the other streams. The sizes of the search areas 27 can then be reduced to decrease the computational cost and, for example, allow the detection of smaller or more distant objects.

An alternative embodiment of the fusion means 19 is illustrated in Figure 4. In this case, detection hypotheses are independently generated in the different image data streams from the different imaging devices 12.1, 12.2, i.e., the secondary stream object detector 32 is provided for generating object detection hypotheses 29 in the second image data stream. Subsequently the hypotheses 26, 29 from the different data streams are associated in an association means 33.

The Figures illustrate embodiments of the invention with two cameras 12.1, 12.2. It can easily be generalized to more than two cameras, for example by treating the cameras pair-wise. In the preferred embodiment, the relative camera positions are known since the cameras are for example mounted at fixed points of the vehicle, and the camera orientations are estimated according to the invention.

## Claims

1. A vision system (10) for a motor vehicle, comprising an imaging means (11) with a plurality of imaging devices (12.1, 12.2) for acquiring images from a surrounding of a motor vehicle, and a processing means (14) adapted to perform image processing on images from said imaging devices (12.1, 12.2), said processing means comprising an object detection means (20) adapted to detect objects in the surrounding of the motor vehicle based on image data from said imaging means (11), and a calibration means (21) adapted to estimate the extrinsic calibration of at least one of said imaging devices (12.1, 12.2), wherein said calibration means (21) is adapted to perform said estimation using the position of detected objects provided by said object detection means (20), wherein said processing means (14) comprises an accumulation means (22) adapted to track and store the position of a plurality of objects detected by said object detection means (20) over time, wherein said calibration means (21) is adapted to evaluate the position of a plurality of detected objects tracked over time for systematic deviations, wherein said calibration means (21) is adapted to at least one of
- estimate a lateral calibration deviation if the positions of detected objects show a systematic lateral deviation in images from different imaging devices (12.1, 12.2) ;
- estimate a vertical calibration deviation if the positions of detected objects show a systematic vertical deviation in images from different imaging devices (12.1, 12.2);
- estimate a rotational calibration deviation if the positions of detected objects show a systematic rotational deviation in images from different imaging devices (12.1, 12.2); and/or
- estimate a focal length and/or an axial calibration deviation if the positions of objects show a systematic radial displacement in images from different imaging devices (12.1, 12.2) .

2. The vision system as claimed in claim 1, wherein the images from a pre-determined one of said imaging devices (12.1, 12.2) are scanned periodically in order to generate hypotheses detections (26).

3. The vision system as claimed in claim 2, comprising a mapping means (23) adapted to map said detection hypotheses, defining search areas (27) in images from another one of said imaging devices (12.1, 12.2).

4. The vision system as claimed in claim 3, wherein said calibration means (21) acts on said mapping means (23) to iteratively improve mapping precision.

5. The vision system as claimed in any one of the preceding claims, comprising at least one detector (24, 32) or hypotheses generator (28) adapted to generate one or more detection hypotheses (26, 29) in the images from said imaging devices (12.1, 12.2).

6. The vision system as claimed in claim 5, comprising at least one classifier (30) adapted to accept or reject detection hypotheses (29).

7. The vision system as claimed in claims 3 and 6, wherein said processing means (14) is adapted to keep track of where in the search areas (27) detection hypotheses (29) finally classified as true object detections were generated.

8. The vision system as claimed in any one of the preceding claims, wherein said processing means (14) comprises a fusion means (19) adapted to fuse information from said plurality of imaging devices (12.1, 12.2).

9. A vision method for a motor vehicle, comprising acquiring images from a surrounding of a motor vehicle using an imaging means with a plurality of imaging devices, and performing image processing on images from said imaging devices, said image processing comprising detecting objects in the surrounding of the motor vehicle based on image data from said imaging means, and estimating, by a calibration means (21), the extrinsic calibration of at least one of said imaging devices using the position of detected objects in said images, and tracking and storing the position of a plurality of objects detected by said object detection means (20) over time in an accumulation means (22), wherein said calibration means (21) evaluates the position of a plurality of detected objects tracked over time for systematic deviations, wherein said calibration means (21) is adapted to at least one of
- estimate a lateral calibration deviation if the positions of detected objects show a systematic lateral deviation in images from different imaging devices (12.1, 12.2);
- estimate a vertical calibration deviation if the positions of detected objects show a systematic vertical deviation in images from different imaging devices (12.1, 12.2) ;
- estimate a rotational calibration deviation if the positions of detected objects show a systematic rotational deviation in images from different imaging devices (12.1, 12.2); and/or
- estimate a focal length and/or an axial calibration deviation if the positions of objects show a systematic radial displacement in images from different imaging devices (12.1, 12.2).

## Patentansprüche

1. Sichtsystem (10) für ein Kraftfahrzeug, umfassend ein Bildgebungsmittel (11) mit einer Vielzahl von Bildgebungsgeräten (12.1, 12.2), um Bilder einer Umgebung des Kraftfahrzeugs zu erfassen, und ein Verarbeitungsmittel (14), das eingerichtet ist, an Bildern von den Bildgebungsgeräten (12.1, 12.2) eine Bildverarbeitung durchzuführen, wobei dieses Verarbeitungsmittel umfasst: ein Objekterkennungsmittel (20), das eingerichtet ist, auf der Basis der Bilddaten vom Bildgebungsmittel (11) Objekte in der Umgebung des Kraftfahrzeugs zu erkennen, und ein Kalibrierungsmittel (21), das eingerichtet ist, die extrinsische Kalibrierung mindestens eines der Bildgebungsgeräte (12.1, 12.2) zu schätzen, wobei das Kalibrierungsmittel (21) eingerichtet ist, diese Schätzung anhand der Position erkannter Objekte durchzuführen, die vom Objekterkennungsmittel (20) bereitgestellt werden, wobei das Verarbeitungsmittel (14) ein Speichermittel (22) umfasst, das eingerichtet ist, die Position einer Vielzahl von Objekten, die vom Objekterkennungsmittel (20) erkannt werden, im Zeitablauf zu verfolgen und zu speichern, wobei das Kalibrierungsmittel (21) eingerichtet ist, die Position einer Vielzahl von erkannten Objekten, die im Zeitablauf verfolgt werden, auf systematische Abweichungen hin zu bewerten, wobei das Kalibrierungsmittel (21) eingerichtet ist, mindestens eines durchzuführen vom:
- Schätzen einer seitlichen Kalibrierabweichung, wenn die Positionen erkannter Objekte in Bildern von verschiedenen Bildgebungsgeräten (12.1, 12.2) eine systematische seitliche Abweichung aufzeigen;
- Schätzen einer vertikalen Kalibrierabweichung, wenn die Positionen erkannter Objekte in Bildern von verschiedenen Bildgebungsgeräten (12.1, 12.2) eine systematische vertikale Abweichung aufzeigen;
- Schätzen einer Rotations-Kalibrierabweichung, wenn die Positionen erkannter Objekte in Bildern von verschiedenen Bildgebungsgeräten (12.1, 12.2) eine systematische Rotationsabweichung aufzeigen; und/oder
- Schätzen einer Brennweiten- und/oder einer axialen Kalibrierabweichung, wenn die Positionen von Objekten in Bildern von verschiedenen Bildgebungsgeräten (12.1, 12.2) eine systematische radiale Abweichung aufzeigen.

2. Sichtsystem nach Anspruch 1, wobei die Bilder von einem vorbestimmten Bildgebungsgerät (12.1, 12.2) periodisch abgetastet werden, um Detektionshypothesen (26) zu erzeugen.

3. Sichtsystem nach Anspruch 2, umfassend ein Kartierungsmittel (23), das eingerichtet ist, die Detektionshypothesen kartieren, indem es in Bildern von einem anderen Bildgebungsgerät (12.1, 12.2) Suchbereiche (27) definiert.

4. Sichtsystem nach Anspruch 3, wobei das Kalibrierungsmittel (21) auf das Kartierungsmittel (23) einwirkt, um die Kartierungsgenauigkeit iterativ zu verbessern.

5. Sichtsystem nach einem der vorherigen Ansprüche, umfassend mindestens einen Detektor (24, 32) oder Hypothesengenerator (28), der eingerichtet ist, eine oder mehrere Detektionshypothesen (26, 29) in den Bildern von den Bildgebungsgeräten (12.1, 12.2) zu erzeugen.

6. Sichtsystem nach Anspruch 5, umfassend mindestens einen Klassifikator (30), der eingerichtet ist, Detektionshypothesen (29) zu akzeptieren oder abzulehnen.

7. Sichtsystem nach Anspruch 3 und 6, wobei das Verarbeitungsmittel (14) eingerichtet ist, zu verfolgen, wo in den Suchbereichen (27) Detektionshypothesen (29) erzeugt wurden, die schließlich als wahre Objekterkennungen klassifiziert wurden.

8. Sichtsystem nach einem der vorherigen Ansprüche, wobei das Verarbeitungsmittel (14) ein Verschmelzungsmittel (19) umfasst, das eingerichtet ist, Information aus der Vielzahl von Bildgebungsgeräten (12.1, 12.2) zu verschmelzen.

9. Sichtverfahren für ein Kraftfahrzeug, umfassend ein Erfassen von Bildern einer Umgebung des Kraftfahrzeugs unter Verwendung eines Bildgebungsmittels mit einer Vielzahl von Bildgebungsgeräten, und ein Durchführen einer Bildverarbeitung an Bildern von diesen Bildgebungsgeräten, wobei die Bildverarbeitung umfasst: ein Erkennen von Objekten in der Umgebung des Kraftfahrzeugs auf der Basis der Bilddaten vom Bildgebungsmittel, und ein Schätzen, durch ein Kalibrierungsmittel (21), der extrinsischen Kalibrierung mindestens eines der Bildgebungsgeräte anhand der Position der in den Bildern erkannten Objekte, und ein Verfolgen und Speichern der Position einer Vielzahl von Objekten, die vom Objekterkennungsmittel (20) im Zeitablauf erkannt werden, in einem Speichermittel (22), wobei das Kalibrierungsmittel (21) die Position einer Vielzahl von erkannten Objekten, die im Zeitablauf verfolgt wurden, auf systematische Abweichungen hin bewertet, wobei das Kalibrierungsmittel (21) mindestens eingerichtet ist zum
- Schätzen einer seitlichen Kalibrierabweichung, wenn die Positionen erkannter Objekte in Bildern von verschiedenen Bildgebungsgeräten (12.1, 12.2) eine systematische seitliche Abweichung aufzeigen;
- Schätzen einer vertikalen Kalibrierabweichung, wenn die Positionen erkannter Objekte in Bildern von verschiedenen Bildgebungsgeräten (12.1, 12.2) eine systematische vertikale Abweichung aufzeigen;
- Schätzen einer Rotations-Kalibrierabweichung, wenn die Positionen erkannter Objekte in Bildern von verschiedenen Bildgebungsgeräten (12.1, 12.2) eine systematische Rotationsabweichung aufzeigen; und/oder
- Schätzen einer Brennweiten- und/oder einer axialen Kalibrierabweichung, wenn die Positionen von Objekten in Bildern von verschiedenen Bildgebungsgeräten (12.1, 12.2) eine systematische radiale Abweichung aufzeigen.

## Revendications

1. Un système de vision (10) pour un véhicule à moteur, comprenant un moyen d'imagerie (11) avec une pluralité de dispositifs d'imagerie (12.1, 12.2) pour acquérir des images d'un environnement d'un véhicule à moteur, et un moyen de traitement (14) adapté pour réaliser un traitement d'image sur des images provenant desdits dispositifs d'imagerie (12.1, 12.2), ledit moyen de traitement comprenant un moyen de détection d'objet (20) adapté pour détecter des objets dans l'environnement du véhicule à moteur sur la base de données d'image provenant dudit moyen d'imagerie (11), et un moyen d'étalonnage (21) adapté pour estimer l'étalonnage extrinsèque d'au moins l'un desdits dispositifs d'imagerie (12.1, 12.2), dans lequel ledit moyen d'étalonnage (21) est adapté pour réaliser ladite estimation en utilisant la position d'objets détectés fournie par ledit moyen de détection d'objet (20), dans lequel ledit moyen de traitement (14) comprend un moyen d'accumulation (22) adapté pour suivre et stocker la position d'une pluralité d'objets détectés par ledit moyen de détection d'objet (20) dans le temps, dans lequel
ledit moyen d'étalonnage (21) est adapté pour évaluer dans la position d'une pluralité d'objets détectés suivis dans le temps des écarts systématiques, dans lequel ledit moyen d'étalonnage (21) est adapté pour au moins l'une de
- l'estimation d'un écart d'étalonnage latéral si les positions d'objets détectés montrent un écart latéral systématique dans des images provenant de dispositifs d'imagerie (12.1, 12.2) différents ;
- l'estimation d'un écart d'étalonnage vertical si les positions d'objets détectés montrent un écart vertical systématique dans des images provenant de dispositifs d'imagerie (12.1, 12.2) différents ;
- l'estimation d'un écart d'étalonnage rotationnel si les positions d'objets détectés montrent un écart rotationnel systématique dans des images provenant de dispositifs d'imagerie (12.1, 12.2) différents ; et/ou
- l'estimation d'une longueur focale et/ou d'un écart d'étalonnage axial si les positions d'objets montrent un déplacement radial systématique dans des images provenant de dispositifs d'imagerie (12.1, 12.2) différents.

2. Le système de vision selon la revendication 1, dans lequel les images provenant d'un dispositif prédéterminé desdits dispositifs d'imagerie (12.1, 12.2) sont balayées périodiquement afin de générer des détections d'hypothèse (26).

3. Le système de vision selon la revendication 2, comprenant un moyen de cartographie (23) adapté pour cartographier lesdites hypothèses de détection, définissant des zones de recherche (27) dans des images provenant d'un autre desdits dispositifs d'imagerie (12.1, 12.2).

4. Le système de vision selon la revendication 3, dans lequel ledit moyen d'étalonnage (21) agit sur ledit moyen de cartographie (23) pour améliorer de manière itérative une précision de cartographie.

5. Le système de vision selon l'une quelconque des revendications précédentes, comprenant au moins un détecteur (24, 32) ou générateur d'hypothèses (28) adapté pour générer une ou plusieurs hypothèses de détection (26, 29) dans les images provenant desdits dispositifs d'imagerie (12.1, 12.2).

6. Le système de vision selon la revendication 5, comprenant au moins un classificateur (30) adapté pour accepter ou refuser des hypothèses de détection (29).

7. Le système de vision selon les revendications 3 et 6, dans lequel ledit moyen de traitement (14) est adapté pour suivre l'endroit dans les zones de recherche (27) où ont été générées des hypothèses de détection (29) finalement classifiées en tant que détections d'objet réel.

8. Le système de vision selon l'une quelconque des revendications précédentes, dans lequel ledit moyen de traitement (14) comprend un moyen de fusion (19) adapté pour fusionner des informations provenant de ladite pluralité de dispositifs d'imagerie (12.1, 12.2).

9. Un procédé de vision pour un véhicule à moteur, comprenant l'acquisition d'images d'un environnement d'un véhicule à moteur en utilisant un moyen d'imagerie avec une pluralité de dispositifs d'imagerie, et la réalisation d'un traitement d'image sur des images provenant desdits dispositifs d'imagerie, ledit traitement d'image comprenant la détection d'objets dans l'environnement du véhicule à moteur sur la base de données d'image provenant dudit moyen d'imagerie, et l'estimation, par un moyen d'étalonnage (21), de l'étalonnage extrinsèque d'au moins l'un desdits dispositifs d'imagerie en utilisant la position d'objets détectés dans lesdites images, et le suivi et le stockage de la position d'une pluralité d'objets détectés par ledit moyen de détection d'objet (20) dans le temps dans un moyen d'accumulation (22), dans lequel
ledit moyen d'étalonnage (21) évalue dans la position d'une pluralité d'objets détectés suivis dans le temps des écarts systématiques, dans lequel ledit moyen d'étalonnage (21) est adapté pour au moins l'une de
- l'estimation d'un écart d'étalonnage latéral si les positions d'objets détectés montrent un écart latéral systématique dans des images provenant de dispositifs d'imagerie (12.1, 12.2) différents ;
- l'estimation d'un écart d'étalonnage vertical si les positions d'objets détectés montrent un écart vertical systématique dans des images provenant de dispositifs d'imagerie (12.1, 12.2) différents ;
- l'estimation d'un écart d'étalonnage rotationnel si les positions d'objets détectés montrent un écart rotationnel systématique dans des images provenant de dispositifs d'imagerie (12.1, 12.2) différents ; et/ou
- l'estimation d'une longueur focale et/ou d'un écart d'étalonnage axial si les positions d'objets montrent un déplacement radial systématique dans des images provenant de dispositifs d'imagerie (12.1, 12.2) différents.
